# EUROPEAN PATENT APPLICATION

(11) **EP 1 918 610 A2**
(43) Date of publication of application: **07.05.2008**
(21) Application number: 07021457.2
(22) Date of filing: 05.11.2007
(51) Int. Cl.: F16G 1/08

(54) **Spliceless baler belt**

(30) Priority: 03.11.2006 US 592885
(71) Applicant: Veyance Technologies, Inc., Fairlawn, Ohio 44333 (US)
(72) Inventor: Belic, Donald Ray, Lincoln, NE 68505 (US)
(74) Representative: Dreiss, Fuhlendorf, Steimle & Becker

(57) **Abstract**

An endless elastomeric belt (10) is comprised of one or more reinforcement layers (25, 45), and one or more elastomeric layers (15), wherein at least one of the reinforcement layers (25, 45) is formed of strips that are spirally wound forming a helix. A method of making an endless belt (10) is provided and includes the steps of applying a first elastomeric layer (15) on the outer circumferential surface (21) of a belt building mandrel (20); splicing the ends (22, 24) together; applying a fabric reinforcement layer (25, 45) over the first layer (15), wherein said reinforcement layer (25) is comprised of a continuous strip which is spirally wound around the mandrel (20) to form a continuous, endless helix, and applying a second elastomeric layer (33, 55) over said fabric reinforcement layer, cutting the layers into one or more belts (10) having a desired width, and then vulcanizing the one or more belts (10).

## Description

### Field of the Invention

The invention relates to fabric belts, and more particularly to rubber coated fabric belts.

### Background of the Invention

Crop baling machines, or balers, typically utilize a moving elongated elastomeric belt to manipulate the crop in one or more ways. In the context of a round hay baler, one or more such elastomeric belts pass over and under a series of drive, idler, and tensioner rollers in a serpentine like arrangement. The belts function to take and form an incoming row of crop into a spiral roll of increasing diameter.

One problem with baler belts is that they typically are made of fabric that is spliced together. The splices can be a source of structural weakness in the belt. Eventually, as the belt wears in service, the belt eventually will fail at the splice. Thus an improved endless belt is desired which eliminates the splice.

### Summary of the Invention

The invention provides an endless elastomeric belt comprised of one or more reinforcement layers, and one or more elastomeric layers, wherein at least one of the reinforcement layers is formed of strips that are spirally wound forming a helix.

The invention provides in a second aspect a method of making an endless belt comprising the steps of applying a first elastomeric layer on the outer circumferential surface of a belt building mandrel; splicing the ends together; applying a fabric reinforcement layer over the first layer, wherein said reinforcement layer is comprised of a continuous strip which is spirally wound around the mandrel to form a continuous, endless helix, and applying a second elastomeric layer over said fabric reinforcement layer, cutting the layers into one or more belts having a desired width, and then vulcanizing the one or more belts.

### Brief Description of the Drawings

The invention will be described by way of example and with reference to the accompanying drawings in which:
FIG. 1 is a perspective view of a baler belt;
FIG. 2 is a cross-sectional view of the baler belt of Figure 1;
FIG. 3 is a an illustration of the belt being built on a mandrel; and

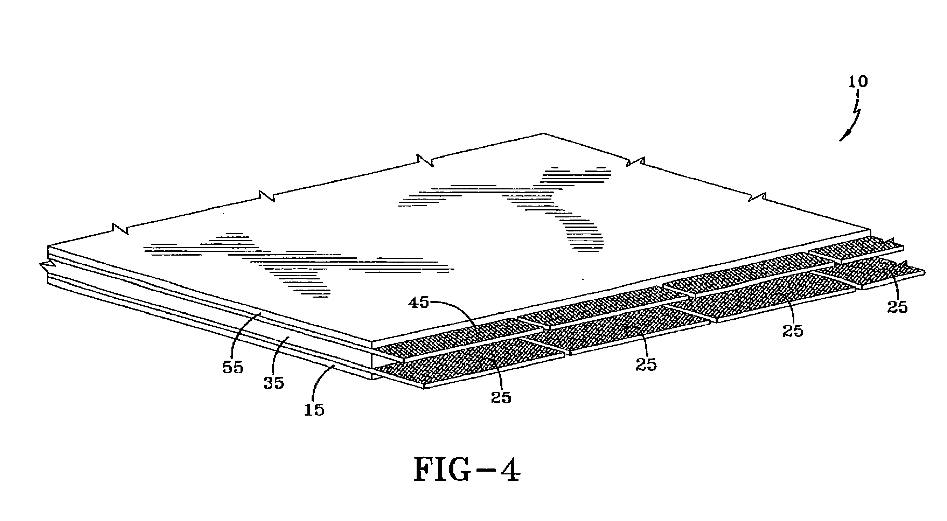

FIG. 4 is a further illustration of the belt being built on a mandrel.

### Detailed Description of the Invention

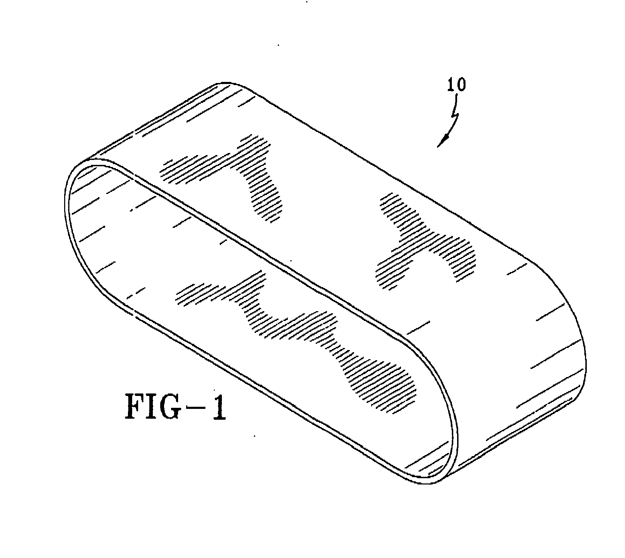

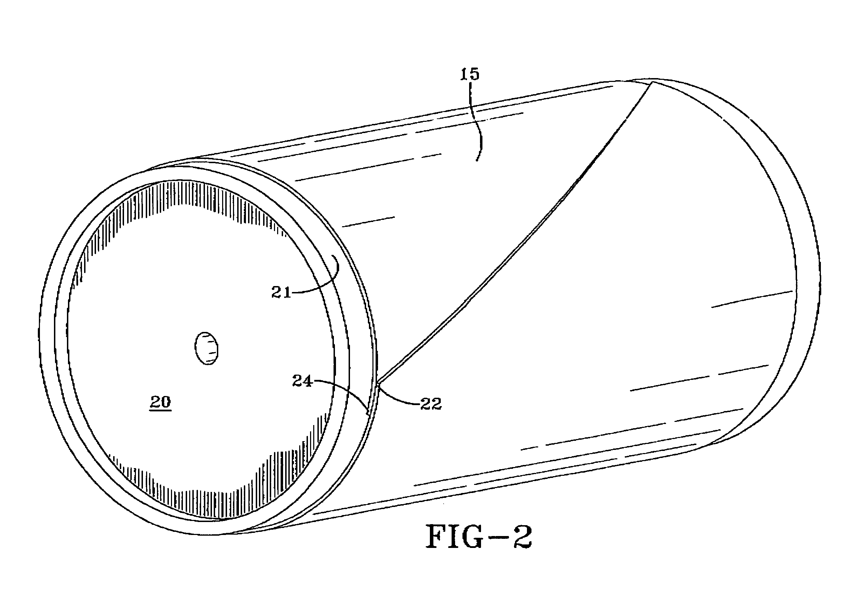

Figure 1 illustrates an endless belt 10 of the invention, suitable for use as, for example, a baler belt, a v-belt, a poly-v belt, synchronous belt or any belt used to perform a function or transmit power. The endless belt 10 comprises an elastomeric body 10 that may be a unitary structure or may include a first layer 15 and a second layer 25 which are substantially parallel and composed of the same or different elastomeric and resilient materials. Representative of the elastomeric materials which may be used include thermosetting natural or synthetic rubbers, thermoplastic elastomers and urethanes. As shown in Figure 2, a first elastomeric layer 15 is wrapped around the outer circumferential surface 21 of belt building mandrel 20. The ends 22, 24 of the gum layer 15 are then spliced together using a butt splice, lap splice or other splice known to those skilled in the art. The splice may be angled at any desired angle or be parallel to the mandrel longitudinal axis.

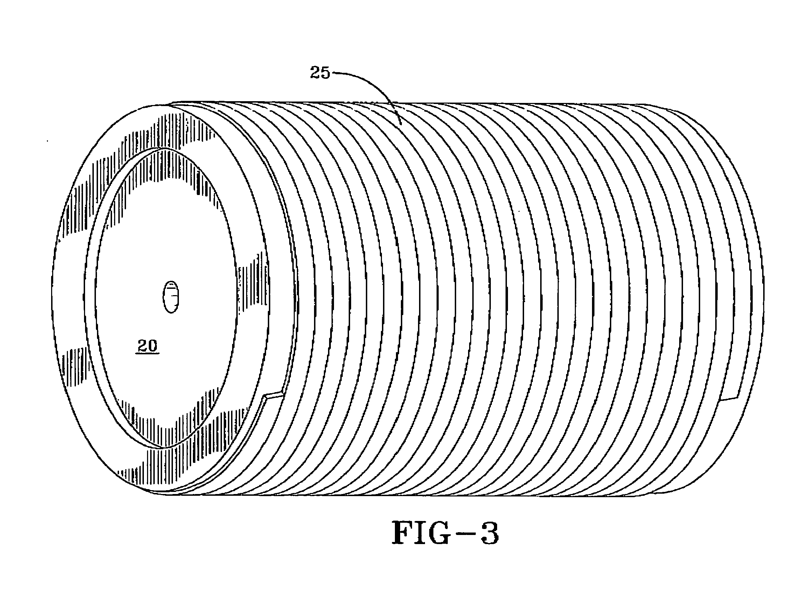

Next, a second layer of fabric reinforcement is applied to the mandrel over the optional first layer 15. The fabric reinforcement layer 25 may comprise any suitable material known to those skilled in the art such as polyester, nylon, kevlar or aramid and rayon. The fabric reinforcement layer is comprised of a continuous strip 25 which is spirally wound around the mandrel to form a continuous, endless helix. The angle of the helix is within about IO degrees or less, and depends on the strip width and the length of the belt. The endless reinforcement layer is shown in Figure 3. The strips may be any desired width, for example, .5 inch, 1 inch, 2 inch. The strips may be optionally overlapped or slightly spaced apart, less than a width or so.

The belt 10 may comprise additional elastomeric layers 35, 55 and fabric reinforcement layers 45. If additional fabric reinforcement layers 45 are used, the additional fabric reinforcement layers may also be spirally applied to the mandrel, preferably in the opposite direction of the first layer of reinforcement. For example, the first reinforcement layer may have a first angular orientation, e.g., being applied from left to right on the mandrel during build. The second reinforcement layer may have a second, different orientation, e.g., being applied from right to left. Applying the layers in this manner avoids the tendency of the belt to track towards the helix. Alternatively, additional layers of fabric reinforcement material may be applied conventionally using a butt splice or lap splice. However it is preferred that the conventional fabric reinforcement layers be interior to the belt, and that the outermost or top and/or bottom fabric reinforcement layers be formed of spiral strips. Reinforcement layers need not be limited to fabric reinforcement. Tensile cord reinforcement could also be used within the carcass body.

After the desired number of layers of elastomer and reinforcement is applied to the mandrel, the belt slab is either removed from the mandrel as a whole or can be cut into separate individual belts limited only by the width of the slab and the width of the individual belts. Example. Slab width is 56 inches. 8 individual belts can be produced that are 7 inches wide. Separation by means of cutting methods know to those skilled in the art is used. The belt slab or individual belts are removed from the mandrel and subjected to heat and pressure to cure the elastomer.

The above described belt and method is not limited to baler belts, and may be utilized to manufacture other belts such as v belts, poly-V belts, synchronous belts, flat belts or any belt that is used to perform a function or transmit power.

Variations in the present invention are possible in light of the description of it provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. An endless elastomeric belt comprised of one or more reinforcement layers, and one or more elastomeric layers, wherein at least one of the reinforcement layers is formed of strips that are spirally wound forming a helix.

2. The endless elastomeric belt of claim 1 wherein the strips have a width in the range of .15 to 1.5 inches.

3. The endless elastomeric belt of claim 1 wherein the strips are made of fabric.

4. A method of making an endless belt comprising the steps of applying a first elastomeric layer on the outer circumferential surface of a belt building mandrel; splicing the ends together; applying a fabric reinforcement layer over the first layer, wherein said reinforcement layer is comprised of a continuous strip which is spirally wound around the mandrel to form a Continuous, endless helix, and applying a second elastomeric layer over said fabric reinforcement layer, cutting the layers into one or more belts having a desired width, and then vulcanizing the one or more belts.

5. The method of claim 4 wherein the strips are spaced apart.

6. The method of claim 4 wherein the strips are overlapped.
